# EUROPÄISCHE PATENTSCHRIFT

(11) **EP 0 721 797 B1**
(45) Veröffentlichungstag und Bekanntmachung des Hinweises auf die Patenterteilung: **23.02.2000**
(21) Anmeldenummer: 95119911.6
(22) Anmeldetag: 16.12.1995
(51) Int. Cl.: B01J 2/00, B01J 2/14

(54) **Verfahren und Vorrichtung zur Pelletierung von heissen Stäuben**
Process and installation for pelletizing hot dusts
Procédé et installation pour granuler des poussières chaudes

(30) Priorität: 13.01.1995 DE 19500901
(43) Veröffentlichungstag der Anmeldung: 17.07.1996
(73) Patentinhaber: DEUTZ Aktiengesellschaft, 51063 Köln (DE)
(72) Erfinder: Rott, Christian, D-53332 Bornheim-Roisdorf (DE); Windbergs, Peter, D-51503 Forsbach (DE)

(56) Entgegenhaltungen:
- DD-A- 237 160
- DE-A- 3 421 877
- DE-A- 3 705 892
- GB-A- 1 037 193
- US-A- 4 212 613

## Beschreibung

Die Erfindung betrifft ein Verfahren zur Pelletierung von heißen Stäuben, die aus dem staubbeladenen Rohgas (Abgas) einer Brennofenanlage zwecks Erhaltung eines staubarmen Ofenabgases (Reingases) abgetrennt werden, in einem Pelletiergerät unter Zusatz von Wasser. Außerdem betrifft die Erfindung eine Anlage zur Durchführung des Verfahrens.

Bei der Pelletierung heißer Stäube unter Zusatz von Wasser als Netzmittel entstehen durch die beim Kontakt des Wassers mit den heißen Stäuben einsetzende Wasserverdampfung Brüden, die durch die mechanische Bewegung des Pelletbettes im Pelletiergerät sowie durch die mit der Wasserverdampfung hervorgerufene Thermik mehr oder weniger mit den zu pelletierenden Stäuben angereichert sind.

Insbesondere bei der Pelletierung von Stäuben, die kalzinierte Anteile enthalten wie beispielsweise aus dem Drehofenabgas gewonnener Bypaßstaub, der bei der Zementklinkerherstellung anfällt und hohe Anteile an CaO enthalten kann, stellen die mit diesen Stäuben angereicherten Brüden ein Problem dar, da bei Unterschreitung des Taupunktes die Brüden auskondensieren und mit den Stäuben einen stark korrosiv wirkenden Belag an der Korrosionsstelle bilden. Es kommt zu Anbackungen, die schnell anwachsen und zu Störungen im Betriebsablauf führen können.

Da aus Gründen des Umweltschutzes die staubhaltigen Brüden nicht einfach aus der Pelletieranlage ins Freie abgeführt werden können, ist eine vorhergehende Entstaubung der Brüden erforderlich, was mit großen Investitions- und Betriebskosten verbunden ist, wobei die Entstaubung aus den oben genannten Gründen bei nicht ausreichender Isolierung oftmals nicht betriebssicher arbeitet.

Es ist Aufgabe der Erfindung, zum Zwecke der Heißstaubpelletierung ein Verfahren und eine Vorrichtung zu schaffen, mit dem bzw. mit der in einfacher Weise eine betriebssichere Brüdenentsorgung durchgeführt werden kann.

Die gestellte Aufgabe wird verfahrensmäßig mit den Maßnahmen des Kennzeichnungsteils des Anspruchs 1 und vorrichtungsmäßig mit den Merkmalen des Kennzeichnungsteils des Anspruchs 7 gelöst.

Durch die erfindungsgemäße Maßnahme, den bei der Pelletierung entstehenden, mit Staub beladenen Brüden in einer Wirbelkammer heißes Ofenabgas zuzumischen, werden die Brüden verdünnt und zusätzlich so weitgehend aufgeheizt, und zwar auf eine Temperatur der brüdenhaltigen Mischung oberhalb der Taupunkttemperatur, daß die Gefahr der Entstehung von Anbackungen infolge einer Brüdenkondensation ausgeschlossen wird.

Durch die weitere Maßnahme der Erfindung, diese aus heißem Ofenabgas und staubhaltigen Brüden bestehende Mischung wieder zu dem zu entstaubenden Ofenabgas, dem Rohgas, zurückzuführen und gemeinsam mit dem Rohgas zu entstauben, werden in einfacher Weise die Brüden entstaubt und gemeinsam mit dem bei der Rohgasentstaubung erhaltenen Reingas ins Freie abgeführt.

Gemäß der Erfindung kann zur Zumischung zu den Brüden ein Teilstrom des bei der Entstaubung erhaltenen Reingases oder ein Teilstrom des noch zu entstaubenden Rohgases verwendet werden.

Vorteilig bei der Verwendung von Reingas ist die einfachere Zuführung des Reingases infolge der in den Abgasleitungen herrschenden Druckverhältnisse, da die Abzweigung des Reingasteilstroms hinter dem Entstaubungsgebläse installiert werden kann.

Vorteilig bei der Verwendung von Rohgas ist, daß der Abgasteilstrom nicht zweimal entstaubt werden braucht und die höhere Staubkonzentration der Mischung aus Rohgas und Brüden bei Störungen zu leichter entfernbaren trockeneren Anbackungen führt.

Insbesondere bei Ofenabgasstäuben, die kalzinierte Anteile wie CaO enthalten, wirkt sich der erfindungsgemäße Kontakt der Brüden mit Staub
- bei Verwendung von Rohgas bereits in der Wirbelkammer oder
- bei Verwendung von Reingas in der Rohgasleitung und während der Entstaubung
positiv aus, da so bereits in der Wirbelkammer bzw. in der Rohgasleitung und während der Entstaubung teilweise eine Hydratisierung des Staubes erfolgt, wodurch die nachfolgende Pelletierung, bei der sonst vollständig hydratisiert werden muß, entlastet wird, so daß sich der Wasserverbrauch (Abführung der bei der Hydratisierung erzeugten Wärme durch Wasserverdampfung) und somit auch die freigesetzte Brüdenmenge reduziert.

Die einzelnen Gasströme (Brüden, Roh- bzw. Reingas, Mischung) sind durch entsprechende Vorrichtungen regelbar, so daß ein bestimmtes Mischungsverhältnis von Brüden und Roh- bzw. Reingas eingestellt und verändert werden kann. Zur Kontrolle des Mischungsverhältnisses werden durch eine entsprechende Meßvorrichtung die Mischungstemperatur und die Druckverhältnisse innerhalb der Wirbelkammer kontinuierlich erfaßt.

Um Störungen infolge von Anbackungen innerhalb der Wirbelkammer zu vermeiden, z. B. beim Anfahren der Anlage bei noch kalter Wirbelkammer, wird der heiße Ofenabgasstrom seitlich tangential in die Wirbelkammer eingeleitet, so daß er innerhalb der Wirbelkammer zunächst an der Innenwand entlang strömt und diese in kurzer Zeit aufgeheizt wird und bereits erfolgte Anbackungen wieder abgetragen werden.

Weitere Einzelheiten, Merkmale und Vorteile der Erfindung werden an einem Ausführungsbeispiel anhand von Zeichnungsfiguren näher erläutert:

Es zeigen:
- Fig. 1:: ein Verfahrensschema einer in Verbindung mit einer Heißstaubpelletierung stehenden Brüdenentsorgung mit Reingaszumischung;
- Fig. 2:: vergrößert einen Querschnitt durch die Wirbelkammer der Fig. 1.

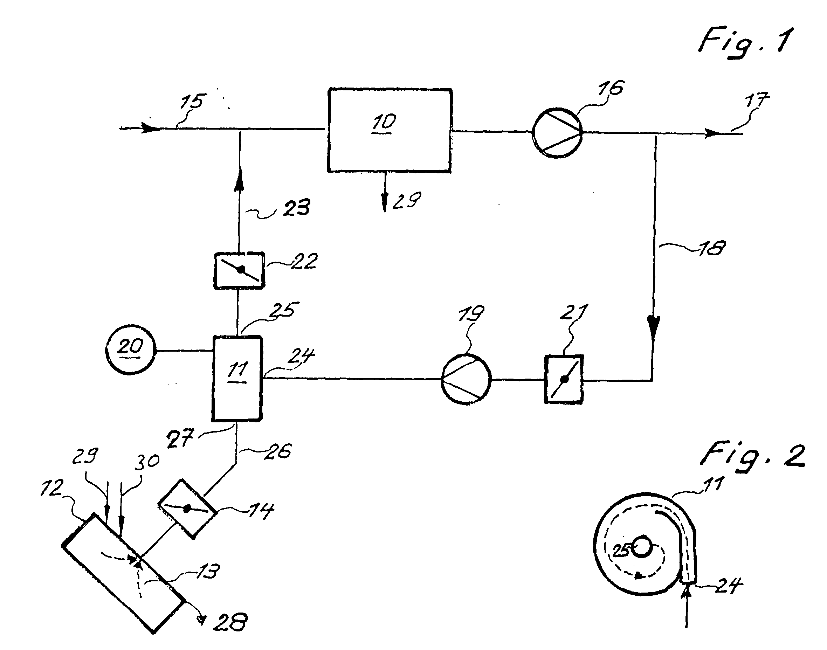

Wie in der Fig. 1 dargestellt, wird das vom Brennofen kommende Ofenabgas (15) (Rohgas) z. B. Bypassgasstrom mit Hilfe eines Gebläses (16) durch eine Entstaubungsvorrichtung (10) geleitet, dort entstaubt und als staubarmes Reingas (17) aus der Anlage abgeführt. Die in der Entstaubungsvorrichtung (10) anfallenden heißen Stäube (29) gelangen über eine in der Zeichnungsfigur nicht dargestellte Leitung in das Pelletiergerät (12), in dem die Stäube (29) unter Zusatz von Wasser (30) zu Pellets (28) umgeformt werden.

Durch den Kontakt der heißen Stäube (29) mit dem Wasser (30) sowie durch die starke Wärmeentwicklung bei der Hydratation von (falls vorhanden) kalzinierten Staubanteilen findet eine teilweise Verdampfung des zugeführten Wassers (30) statt, es entstehen sogenannte Brüden (13), die mit Staub angereichert sind und entfernt bzw. entsorgt werden müssen.

Durch die Brüdenleitung (26) werden diese Brüden (13) zur axialen Eintragsöffnung (27) einer zylindrischen Wirbelkammer (11) geführt und dort mit durch eine seitlich tangential angeordnete Eintragsöffnung (24) (siehe Fig. 2) einströmenden Reingas (18) vermischt. Die erhaltene Mischung (23) aus Brüden und Reingas wird über eine axiale Austragsöffnung (25) aus der Wirbelkammer (11) abgeführt und dem Rohgas (15) zugeführt, dann gemeinsam mit diesem in der Entstaubungsvorrichtung (10) entstaubt und gemeinsam mit dem Reingas abgeführt.

Der Reingasteilstrom (18) wird dem Reingasstrom (17) hinter dem Entstaubungsgebläse (16) entnommen, da hier die günstigsten Druckverhältnisse vorliegen (± 0 mm WS) und über ein Zusatzgebläse (19) in die Wirbelkammer (11) gefördert. Durch die Regelklappen (21 und 22) wird sichergestellt, daß innerhalb der Wirbelkammer (11) nur ein geringer Unterdruck (ca.-10 mm WS) vorherrscht, so daß neben den Brüden nicht auch noch zusätzliche Falschluft durch das Pelletiergerät gezogen wird und der volle Unterdruck der Rohgasleitung (ca. - 150 mm WS) nicht wirksam wird.

Durch regelbare Klappen (14, 21, 22) sind auch die einzelnen Gasmengenströme (13, 18, 23) regelbar, so daß ein bestimmtes Mischungsverhältnis innerhalb der Wirbelkammer (11) eingestellt und verändert werden kann.

Zur Kontrolle und zur Regelung dieses Mischungsverhältnisses werden mit einer Meßvorrichtung (20) die Temperatur und der Druck innerhalb der Wirbelkammer (11) kontinuierlich erfaßt.

Die im angeführten Ausführungsbeispiel dargestellte Entsorgung der Brüden läßt sich ohne aufwendige Investitions- und Betriebskosten durchführen; sie arbeitet störungsfrei und kann auch in bereits bestehende Anlagen installiert werden.

## Patentansprüche

1. Verfahren zur Pelletierung von heißen Stäuben, die aus dem staubbeladenen Rohgas (15) (Abgas) einer Brennofenanlage zwecks Erhaltung eines staubarmen Ofenabgases (17) (Reingases) abgetrennt werden, in einem Pelletiergerät (12) unter Zusatz von Wasser (30),
dadurch gekennzeichnet, daß die bei der Pelletierung anfallenden staubhaltigen Brüden (13) in eine Wirbelkammer (11) eingeleitet und dort mit einem Teilstrom des Abgases der Brennofenanlage vermischt werden und die so erhaltene Mischung (23) aus staubbeladenen Brüden und Ofenabgas mit einer oberhalb der Taupunkttemperatur liegenden Mischungstemperatur dann zum Rohgas (15) zurückgeführt wird.

2. Verfahren nach Anspruch 1, dadurch gekennzeichnet, daß zur Zumischung zu den Brüden ein Teilstrom (18) des Reingases (17) verwendet wird.

3. Verfahren nach Anspruch 1, dadurch gekennzeichnet, daß zur Zumischung zu den Brüden ein Teilstrom des Rohgases (15) verwendet wird.

4. Verfahren nach Anspruch 1, 2 oder 3, dadurch gekennzeichnet, daß die Temperatur des zur Zumischung zu den Brüden verwendeten Ofenabgasteilstroms bei seinem Eintritt in die Wirbelkammer (11) so hoch ist, daß die resultierende Temperatur der brüdenhaltigen Mischung (23) oberhalb der Taupunkttemperatur der brüdenhaltigen Mischung (23) liegt.

5. Verfahren nach Anspruch 4, dadurch gekennzeichnet, daß zur Aufrechterhaltung einer über der Taupunkttemperatur liegenden Mindesttemperatur der Mischung (23) das Mischungsverhältnis zwischen den staubhaltigen Brüden (13) und dem Ofenabgasteilstrom mittels Meß- und Regelvorrichtungen (14, 20, 21, 22) eingestellt und verändert werden kann.

6. Verfahren nach einem oder mehreren der vorhergehenden Ansprüche, dadurch gekennzeichnet, daß der Ofenabgasteilstrom durch die Eintrittsöffnung (24) seitlich tangential in die Wirbelkammer (11) eingeführt wird.

7. Vorrichtung zur Durchführung des Verfahrens nach einem oder mehreren der vorhergehenden Ansprüche, gekennzeichnet durch eine über eine Leitung (26) mit dem Pelletiergerät (12) gasdicht verbundene Wirbelkammer (11) mit einer seitlichen tangentialen Eintrittsöffnung für das Ofenabgas und einer axialen Austrittsöffnung (25) für die in der Wirbelkammer (11) erzeugte Mischung (23) aus staubhaltigen Brüden und Ofenabgas, und mit Meß- und Regeleinrichtungen (14, 20, 21, 22), durch die die Temperatur- und Druckverhältnisse innerhalb der Wirbelkammer (11) erfaßt und das Mischungsverhältnis wahlweise durch Regelung der Brüdenmenge und/oder der Abgasmenge und/oder der Mischungsmenge eingestellt und verändert werden können.

## Claims

1. A method whereby hot dust separated from the dust-laden crude gas (15) (waste gas) from a furnace system is pelleted in a pelleting device (12) with addition of water (30) in order to obtain a dust-free furnace waste gas (17) (pure gas),
characterised in that the dusty vapours (13) occurring during pelleting are introduced into a centrifugal chamber (11) and mixed with a part of the stream of waste gas from the furnace system and the resulting mixture (23) of dust-laden vapours and furnace waste gas is returned to the crude gas (15) at a mixture temperature above the dew-point temperature.

2. A method according to claim 1, characterised in that a part-stream (18) of pure gas (17) is used for mixing with the vapours.

3. A method according to claim 1, characterised in that a part-stream of the crude gas (15) is used for mixing with the vapours.

4. A method according to claim 1, 2 or 3, characterised in that the temperature of the part-stream of furnace waste gas used for mixing with the vapours, on entry into the centrifugal chamber (11), is high enough for the resulting temperature of the vapour-containing mixture (23) to be above the dew-point temperature of the vapour-containing mixture (23).

5. A method according to claim 4, characterised in that in order to maintain the mixture (23) at a minimum temperature above the dew-point temperature, the mixing ratio between the dusty vapours (13) and the part-stream of furnace waste gas is adjusted and altered by measuring and control devices (14, 20, 21, 22).

6. A method according to one or more of the preceding claims, characterised in that the part-stream of furnace waste gas is introduced laterally and tangentially through the inlet opening (24) into the centrifugal chamber (11).

7. A device for working the method according to one or more of the preceding claims, characterised by a centrifugal chamber (11) connected in gas-tight manner to the pelleting device (12) via a line (26) and comprising a lateral tangential inlet opening for the furnace waste gas, an axial outlet opening (25) for the mixture (23) of dusty vapours and furnace waste gas generated in the centrifugal chamber (11), and measuring and control devices (14, 20, 21, 22) which detect the temperature and pressure inside the centrifugal chamber (11) and can adjust and alter the mixing ratio as required by adjusting the amount of vapours and/or the amount of waste gas and/or the amount of mixture.

## Revendications

1. Procédé servant à mettre sous la forme de boulettes des poussières brûlantes qui sont séparées à partir des gaz bruts chargés de poussières (15) (gaz bruts), d'une installation de four de calcination, de façon à obtenir des gaz d'échappement du four pauvres en poussières (17) (gaz épurés), dans un appareil (12) de transformation en boulettes (12) par addition d'eau (30),
caractérisé en ce que
les buées (13) contenant des poussières qui se produisent lors de la transformation en boulettes sont introduites dans une chambre de tourbillonnement (11) et sont mélangées à cet endroit à un flux partiel de gaz d'échappement de l'installation du four de calcination et le mélange ainsi obtenu (23) qui se compose de buées chargées de poussières et de gaz d'échappement du four est ramené ensuite aux gaz bruts (15) sous une température de mélange se situant en dessus de la température du point de rosée.

2. Procédé selon la revendication 1,
caractérisé en ce qu'
on utilise un flux partiel (18) des gaz épurés (17) pour l'ajouter et le mélanger aux buées.

3. Procédé selon la revendication 1,
caractérisé en ce qu'
on utilise un flux partiel des gaz bruts(15) pour l'ajouter et le mélanger aux buées.

4. Procédé selon la revendication 1, 2 ou 3,
caractérisé en ce que
la température du flux partiel des gaz d'échappement du four, qui est utilisé pour être ajouté et mélangé aux buées, est si élevée lors de son entrée dans la chambre de tourbillonnement (11) que la température qui en résulte pour le mélange (23), contenant des buées, se situe au-dessus de la température du point de rosée du mélange (23) contenant des buées.

5. Procédé selon la revendication 4,
caractérisé en ce que
pour maintenir une température minimale du mélange (23) qui se situe au-dessus de la température du point de rosée, on peut régler et faire varier le taux du mélange entre les buées contenant des poussières (13) et le flux partiel des gaz d'échappement du four au moyen de dispositifs de mesure et de réglage (14, 20, 21, 22).

6. Procédé selon l'une ou plusieurs des revendications précédentes,
caractérisé en ce que
le flux partiel des gaz d'échappement du four est introduit à travers l'ouverture d'entrée (24) latéralement de façon tangentielle dans la chambre de tourbillonnement (11).

7. Dispositif pour la mise en oeuvre du procédé selon une ou plusieurs des revendications précédentes,
caractérisé par
une chambre de tourbillonnement (11), qui est reliée au moyen d'une conduite (26), de façon étanche aux gaz à l'appareil de transformation (12) des poussières en boulettes, avec une ouverture d'entrée pour les gaz d'échappement du four, qui est disposée latéralement de façon tangentielle, et avec une ouverture de sortie axiale (25) pour le mélange (23), produit dans la chambre de tourbillonnement (11), qui se compose de buées chargées de poussières et de gaz d'échappement du four, et avec des dispositifs de mesure et de réglage (14, 20, 21, 22), avec lesquels on détecte les conditions de température et de pression à l'intérieur de la chambre de tourbillonnement (11) et on peut régler et faire varier le taux du mélange à volonté en réglant le débit des buées et/ou des gaz d'échappement et/ou le débit du mélange.
